(19) Europäisches Patentamt
European Patent Office
Office européen des brevets

(11) Publication number: **0 071 349**
**B1**

(12) **EUROPEAN PATENT SPECIFICATION**

(45) Date of publication of patent specification: **01.10.86**

(51) Int. Cl.$^4$: **B 29 C 47/00,** B 05 D 7/22

(21) Application number: **82303495.4**

(22) Date of filing: **02.07.82**

(54) **Process for producing an extruded and stretched tubular material and stretched tubular material.**

(30) Priority: **31.07.81 US 289018**

(43) Date of publication of application:
**09.02.83 Bulletin 83/06**

(45) Publication of the grant of the patent:
**01.10.86 Bulletin 86/40**

(84) Designated Contracting States:
**AT BE CH DE FR GB IT LI LU NL SE**

(56) References cited:
**GB-A-1 176 204**
**US-A-3 068 516**
**US-A-3 280 233**
**US-A-3 560 602**
**US-A-3 576 658**
**US-A-3 960 810**

(73) Proprietor: **W.R. GRACE & CO.**
**Grace Plaza 1114 Avenue of the Americas**
**New York New York 10036 (US)**

(72) Inventor: **Mueller, Walter Berndt**
**301 Thornwood Drive**
**Taylors South Carolina 29687 (US)**
Inventor: **Schoenberg, Julian Harry**
**216 Ashford Avenue**
**Greenville South Carolina 29609 (US)**

(74) Representative: **Collier, Jeremy Austin Grey et al**
**J.A.Kemp & Co. 14, South Square Gray's Inn**
**London WC1R 5EU (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the production of extruded and stretched tubular material by the blown bubble process and is especially applicable to the formation of thin heat-sealable oriented films.

The blown bubble process has been utilized for many years and is well known by those skilled in the art. This process is disclosed in numerous patents, e.g. U.S. Patent No. 3,022,543.

Generally speaking, the blown bubble process utilizes the application of inner pressure to stretch and thus orient a heat-sealable polyolefin material which has been melt extruded in tubular form, cooled and reheated to its orientation temperature. The inner pressure is applied by the trapping of a gaseous bubble inside the extruded tubular structure so as to stretch the heated polyolefin material to orient the molecular infra-structure of the polymer. Reheating of the extruded material may be accomplished by means well known in the art such as a hot air oven, hot water or hot oil bath. Of course, the reheating means may vary depending upon the orientation temperature of the extruded material.

Many of the heat sealable polyolefin materials and, in particular homopolymers and copolymers and blends thereof of monoalpha polyolefins having from 2—8 carbon atoms, which have heretofore been utilized in the blown bubble process weld when heated to the temperature range in which the material can be oriented. Welding as used herein refers to the tendency of two or more surfaces of a given material to adhere to one another at certain temperatures and pressures. Accordingly, a problem which has arisen in past applications of the blown bubble process with extruded tubular materials which weld upon heating to their orientation temperature range is the resistance of the materials to separation by internal pressure applied by the internally trapped gaseous bubble.

It is known in the art that the utilization of a film-forming air mandrel, as opposed to a solid mandrel with which the extruded film comes into actual contact, for supporting and forming the cooling melt-extruded tubular material shortly after extrusion provides an improvement in the optical properties of the extruded material. It is believed that this increase in clarity results because the inner surface of the cooling tubular material extruded over the air mandrel never contacts the mandrel and, therefore, is not submitted to the minute scratching etc. which adversely affects a film's overall optical properties.

A major drawback of the blown film process when utilized in conjunction with materials which weld in their orientation temperature range is the limitation on film thickness. Heretofore, a film thickness of less than 0.50 mils (0.013 mm) was not consistently obtainable by utilization of the blown bubble process when applied to tubular extruded structures having as an inner surface a weldable polyolefin material. The limitation on thickness directly resulted from the internal welding surface of the heated tubular materials, because the strength of the internal structure of the thin film material having a thickness of less than 0.50 mils (0.013 mm) was closely similar to, or exceeded by, the strength of the weld. Thus, in the past, the structural integrity of thin tubular films having an inner weldable surface and a thickness of less than 0.50 mils (0.013 mm) was compromised upon inflation of the tubular structure and subsequent attempted separation of the welded layers.

Unfortunately, it has been found that utilization of an air mandrel to increase film clarity as discussed above further limits the lowest obtainable film thickness since films processed utilizing the air mandrel exhibit increased welding. It is believed that this increased welding arises from improved inner surface contact of the collapsed tubular film which results from the more uniform, scratchless, film surface created through processing by the air mandrel. Therefore, utilization of an air mandrel apparently conflicted with the goal of obtaining a thinner film.

Yet another problem in attempting to obtain thin film of improved optical properties and decreased thickness was that the heat sealing characteristics of the thin film could not be compromised. This fact apparently ruled out the utilization of materials, apparatus or processes which were known adversely to affect the heat sealing characteristics of the thin film.

Lastly, it was also desirable that the thin film would be able to be easily inked or printed upon. Thus, utilization of materials, apparatus or processes which were known adversely to affect the ink adhesion of the thin film appeared to be negated.

Thus the desire to produce thin films having increased clarity, decreased thickness and adequate heat sealing and inking characteristics, by a process using an air mandrel appeared to involve mutually incompatible conditions.

The present invention provides an improvement of the blown bubble process for orienting thin films in which internal welding is eliminated or greatly reduced, and polyolefin films having a thickness of less than 0.50 mils (0.013 mm), improved clarity, good heat seal characteristics, and good ink adhesion can be obtained.

According to the present invention, a process for producing a tubular polyolefin material having a heat-sealable interior surface by extruding the said material over an air mandrel in the form of a tube, coating the interior surface of the tube with 1 to 20 milligrams per square foot (10 to 215 mg/$m^2$) of a polyorganosiloxane, collapsing the tube, stretching the tube by maintaining a blown bubble therein, and finally collapsing the stretched tube into a lay-flat arrangement. In this process the polyorganosiloxane is applied to the inner surface of the tubular extruded material after the material has passed over an air mandrel but prior to the collapsing of the tubular structure. The polyorganosiloxane acts as a release agent when the collapsed and reheated tubing is opened. The internal welding that is present upon opening and

separation of the tubular structure is greatly reduced or entirely eliminated as a result of the presence of the polyorganosiloxane. Surprisingly, the heat sealing and ink adhesion characteristics of the polyolefin film are not adversely affected. Since the internal welding is, at the least, greatly reduced it has now become possible to employ more effectively an air mandrel and to produce films of greatly reduced thickness.

It has previously been proposed in United States Patent No. 3280233 to coat the inside of a tubular plastics film, especially a polyvinylidene chloride film, by maintaining in the tube a column of liquid polysiloxane prior to flattening the tube. This treatment is said to improve the surface of the film obtained for certain purposes including deposition of further plastic coatings. It is evident that this process involves application of a large and essentially uncontrolled amount of the polysiloxane to the film.

It has also been proposed in United States Patent No. 3576658 to coat the surface of a biaxially oriented tubular thermoplastics film by wetting the inner surface of the tube before orientation with a coating liquid consisting of water and a coating agent, e.g. a slipping agent. The importance of uniform wetting of the film is emphasised. This method clearly cannot be used with non-aqueous coating liquids.

In the accompanying drawings,

Figure 1 is a representation of the improved blown bubble process as disclosed by the present invention;

Figure 2 is a detailed view of the process and equipment involved in applying a mist of polyorganosiloxane to the interior of an extruded tubular structure;

Figure 3 is a representation of the blown bubble as it existed in the prior art process; and

Figure 4 is a representation of the blown bubble resulting from application of a mist of polyorganosiloxane to the interior of an extruded and thereafter heated and expanded tubular structure.

In the drawings like reference numerals denote like structures.

In Figure 2, which is a detailed depiction of the extrusion and liquid polyorganosiloxane application system, compressed air source 1, which is controlled by automatic pressure control valve 2, provides pressurization to silicone head tank 6 by way of tubing 10. Silicone head tank 6 contains a quantity of liquid polyorganosiloxane 7 which has been added to head tank 6 by way of silicone addition port 4. The level of liquid polyorganosiloxane 7 in tank 6 is monitored by level sight glass 3. Low levels of liquid polyorganosiloxane 7 in tank 6 may also be indicated by a low level alarm 5. Manual cutoff valves 8 are located throughout the entire system to isolate the various constituent parts for cleaning, repair, etc. The location of representative cutoff valves 8 is shown and the location of additional valves would be quite apparent to those of ordinary skill in the art. Liquid polyorganosiloxane 7 exits tank 6 in tubing 10 and thereafter passes through a fine mesh strainer 9 which removes any particulate matter which still may be present. After exiting the fine mesh strainer 9 the liquid polyorganosiloxane 7 continues by way of tubing 10 to metering pump 11. The outflow from metering pump 11 by tubing 10 is monitored by pressure gauge 12. Next, the liquid polyorganosiloxane 7 passes through a backflow restrictor 13 and into a high/low drop count alarm 14 for the precise regulation of the liquid polyorganosiloxane 7 flow. The liquid polyorganosiloxane 7 flow may be manually checked and calibrated as, for example, at 15 prior to it proceeding to and through tubular extrusion or coextrusion die 21. After passing through die 21 the liquid polyorganosiloxane 7 continues downward in tubing 10 which passes through both air mandrel 26 and stabilizing plug 29 on into siloxane spray nozzle 30.

Concurrently with the above-discussed provision of liquid polyorganosiloxane 7 to siloxane spray nozzle 30, a second compressed air source 16 which, of course, may be the same as compressed air source 1, provides pressurizing air through tubing 10 and air rotometer 17. After exiting air rotometer 17 the pressurizing air continues by way of tubing 10 to die 21. The pressurizing air then passes through die 21 and thereafter continues, by way of tubing 10, downward through air mandrel 26 and stabilizing plug 29 into siloxane spray nozzle 30. Siloxane spray nozzle 30 is a standard venturi type nozzle whereby the pressurized air provided from source 16, upon entering the siloxane spray nozzle 30, creates a small vacuum within nozzle 30 which transforms the liquid polyorganosiloxane 7 entering siloxane spray nozzle 30 into a very fine spray or mist 31.

Turning attention to the basic extrusion or coextrusion process as outlined in Figure 2, it can be seen that resinous material placed into extruder 20 is heated and compressed into melt form and forced through die 21 which may be an extrusion or coextrusion die. Upon exit of the extruded tubular melt 23 from die 21 the melt 23 is quenched by cascading 28 chill water 34 which is provided by chill water source 24 to chill water ring 25. Chill water ring 25 encircles the tubular melt 23 such that the chill water 34 overflows the inner circumference of the chill water ring 25 and comes into cascading contact 28 with the extruded melt 23. The rapidly cooling melt 23 continues downward and is inwardly supported and formed by cylindrical air mandrel 26. Cylindrical air mandrel 26 is provided over its entire radial surface with numerous air orifices 27. The air mandrel 26 receives pressurized air from a third compressed air source 18, which may be the same as that of sources 1 and 16. Compressed air source 18 provides pressurizing air to die 21 by way of tubing 10 and a second air rotometer 19. The pressurizing air thereafter passes through die 21, enters air mandrel 26 and exits by air mandrel 26 air orifices 27. Upon exiting the air mandrel 26 by orifices 27 the pressurizing fluid supports the cooling extruded melt 23 without melt 23 contacting air mandrel 26. Die 21 is provided with air vents 22 through which tubing 10 may pass and by which the excess pressurizing air from sources 16 and 18 is vented.

Upon cooling, the extruded tubular melt 23 solidifies to form an extruded tubular structure 32 which

contacts and is supported by a stabilizing plug 29. The cascading 28 chill water falls and is collected in chill water bath tank 33. The chill water 34 may be recirculated from chill water bath tank 33 to chill water source 24 by way of pump 37. The solidified extruded tubing 32 is collapsed by nip rolls 35 and is transported in lay flat arrangement by transfer rolls 36.

Returning to the liquid polyorganosiloxane 7 application system and with reference to the basic extrusion or coextrusion process described above, mist 31 exits siloxane spray nozzle 30 and is deposited onto the inner surface of the solidified extruded tubular material 32. The mist is then internally transported along with the material 32 by nip rolls 35 and transfer rolls 36.

Turning to Figure 1, the collapsed tubular extruded material 32 may be transported by transfer rolls 36 to an inventory area 38. Thereafter, depending on the resinous materials utilized and the properties desired in the finished extruded material 32, the material 32 may be irradiated by means well known in the art as at 39. From irradiation source 39 the material 32 may pass through yet another inventory area 40 and thence into a heating chamber means 41. Heating chamber means 41 is utilized to elevate the temperature of the material 32 to its orientation temperature. Heating chamber means 41 may be any means known in the art such as, for example, a hot air oven or hot water or oil bath. After material 32 is elevated to its orientation temperature it exits heating chamber means 41 through heating chamber means exit nip rolls 42 while surrounded by a cooling air ring 43. Then the heated lay flat material 32 is separated and expanded by formation of bubble 44 so as to orient the molecular structure of material 32. The bubble 44 is collapsed after orientation by a bubble conveying assembly 45 and deflate nip rollers 46 both of a type well known in the art. The oriented lay flat material 32 is then transported by transfer rolls 36 to a packaging area 47.

Turning to Figures 3 and 4 which concentrate on the bubble 44 formation step, a bubble 44 formation as existed in the prior art is illustrated by Figure 3. In particular, it is to be noted that welding occurs in area 48 (somewhat exaggerated for purposes of illustration) immediately following the exit of the material 32 from the heat chamber exit nip rolls 42. This situation is to be compared with that as illustrated in Figure 4 which results from the application of a liquid polyorganosiloxane 7 to the inner surface of the tubular material 32. Figure 4 clearly illustrates at 49 that welding of the inner surfaces of tubular material 32, upon passage through the heat chamber means 41 and the heat chamber exit nip rolls 42, is virtually eliminated when the heated tubular material 32 is inflated.

In view of the fact that liquid polyorganosiloxanes, while known as mold release agents, are also generally known to adversely affect the heat sealing characteristics of heat sealable thin irradiated films and, in particular, polyethylene films, the success of the method presently disclosed is considered to be highly unforeseen and surprising. The surprising success arises from the discovery that the liquid polyorganosiloxane 7, when applied as a mist in quantities of from 2 to 16 mg/sq. ft. (21 to 172 mg/m$^2$) of tubular extruded material 32, does not adversely affect the heat sealing characteristics of irradiated thin polyethylene material 32. When the liquid polyorganosiloxane 7 is applied in quantities less than 2 mg/sq. ft. (21 mg/m$^2$) of tubular extruded irradiated polyethylene material 32, the effectiveness of the liquid polyorganosiloxane 7 as an internal welding inhibitor is increasingly impaired with increasingly lower concentrations. When quantities of less than 1 mg of polyorganosiloxane per sq. ft. (10 mg/m$^2$) of tubular extruded irradiated polyethylene material is applied it has been found that the effectiveness of the liquid polyorganosiloxane 7 as a welding inhibitor is negated. Additionally, at concentrations of liquid polyorganosiloxane 7 greater than 16 mg/sq. ft. (172 mg/m$^2$) of extruded irradiated polyethylene material 32, the heat sealing characteristics of the material 32 becomes more and more adversely affected. When concentrations of liquid polyorganosiloxane 7 greater than 20 mg/sq. ft. (215 mg/m$^2$) of extruded irradiated polyethylene material 32 are applied it has been found that the heat sealing characteristics of the polyethylene material 32 are destroyed.

While the above-discussed ranges of amount of polyorganosiloxane applied per unit area of extruded material apply to polyethylene, the applicable ranges for other materials which are weldable may be easily ascertained by those in the art without undue experimentation. The ranges will, of course, vary with material and the amount of irradiation the material is exposed to.

The following Examples illustrate the invention.

## Example 1

Plastic pellets of Dow Linear Intermediate Density Polyethylene Resin Type X061500.37 having a density of 0.935 gm/cc and a melt index of 2.5 were fed into extruder 20, compressed, heated and forced downward through a heated eight (8) inch (20 cm) diameter spiral tubular die 21 containing several air vent holes 22. The melt extrudate 23 exits in tubular form from the die orifice and is then transported over a downwardly tapering air mandrel 26. The air flow to the air mandrel 26 for supporting the tubular extrudate 23 was controlled in the range of 1—8 SCFM (standard cubic feed per minute (0.03 to 0.23$^{m^3}$/minute)) by rotometer 19. The rapidly cooling tubular material 32 then contacted and passed over stabilizing plug 29 below which the tube was collapsed and pulled through a pair of speed controllable nip rolls 35, one of which is covered with neoprene.

Just above the point where the hot tubular melt extrudate 23 passes over the upper edge of the air mandrel 26, external quenching was initiated with cascading 28 chill water 34 supplied from an iris water ring 25. The chill water 34 was supplied from chiller 24 at a rate of 15 plus or minus 10 gallons (56.8 $\pm$ 37.8 dm$^3$) per minute and a temperature of 46 plus or minus 6°F (8 $\pm$ 3°C).

The liquid polyorganosiloxane spray coating or misting system consisted of an elevated 10 gallon (38 $dm^3$) head tank 6 containing a reservoir of liquid General Electric SF 18 polydimethylsiloxane 7. The liquid polydimethylsiloxane 7 was carried through tubing 10 and valves 8 and a fine mesh strainer of 200 mesh (sieve opening 0.074 mm) or less 9 to the inlet or suction side of a low volume Milton Roy Mini-Pump 11 Model 369—9.4 having a delivery capacity range of from 4.7 to 47 ml per hour. In this example the pump 11 was set to deliver 0.2 ml per minute. The liquid polydimethylsiloxane 7 was then pumped against a back pressure restrictor 13 with a pressure gauge 12 reading of at least 50 psig. (344 kPa). The liquid polydimethylsiloxane 7 then flowed by gravity through a high/low frequency alarm drop counter 14 and a manual flow calibration check point 15. The liquid polydimethylsiloxane 7 was then transported by tubing 10 through a die 21 vent hole 22, through the hollow support stem for the air mandrel 26 and into misting nozzle 30. The misting nozzle 30 was a Model A—3615 hi-low unit from Aetna Manufacturing.

A supply of compressed air 16 was transported to the misting nozzle 30 at a controlled flow rate of 1—2 SCFM by way of air rotometer 17. The venturi action of the nozzle 30 provided a downward mist 31 which peripherally coated the inner wall of the tubular material 32 before it was transported by the nip rolls 35 at a speed of 30 feet (9.14 m) per minute. A material 32 transportation speed of 30 feet (9.14 m) per minute when combined with a liquid polydimethylsiloxane 7 supply rate of 0.2 ml per minute, as is here the case, equates to a coating application of 4 mg of liquid polydimethylsiloxane 7 per square foot (43 $mg/m^2$) of material 32.

After the tubular material 32 was collapsed by the nip rolls 35 it was transported by a series of transfer rolls 36 through an inventory area 38 and was then passed through an electron beam irradiation unit 39 wherein the material 32 was crosslinked by an irradiation dosage of 3.5 MR plus or minus 0.5 MR. The material 32 continued through a second inventory area 40 into a heating oven 41 where its temperature was raised to 250 plus or minus 10°F. (121 ± 5°C). The material 32 then exited the oven 41 through a set of neoprene covered nip rolls 42, upward through bubble cooling air ring 43 and thence to a pair of driven deflate rolls 46. After the material 32 passed through the deflate rolls 46 a compressed air hose was inserted into the open end of the tube and the tube was opened back to the nip rolls 42. No inner tubular material 32 welding was observed. At this point the pressurized air flow was increased and the hot plastic tubular material 32 exiting from oven 41 was further inflated and expanded to a diameter approximately equal to five (5) times that of its original diameter. The driven deflate nip rolls 46 were then closed and set at a speed of 162 feet (49.4 m) per minute. The automated bubble converging assembly 45 was then closed and the deflate nip rolls were lowered by driven jack screws until a bubble diameter of 30 inches (76 cm) was obtained.

As a result of the above example the six (6) inch (15 cm) diameter tubing with a sixteen (16) mil (0.4 mm) wall thickness was manufactured into a thin film having a finished thickness of 0.6 mil (0.015 mm) and being oriented 5 to 1 in the transverse direction and by 5.4 to 1 in the longitudinal direction.

Thus, after expansion, the final coating of polydimethylsiloxane was approximately 0.148 mg per square foot (1.6 $mg/m^2$) of final product.

The hot wire trim seal strength of this material, when sealed with the siloxane layers interfaced, was not adversely affected as compared to the hot wire trim seal strength of the material when sealed with the siloxane layers noninterfaced. In fact when the siloxane layers were interfaced an improved hot wire trim seal strength was obtained. This seal strength data which is tabulated below was obtained by dynamically forming hot wire trim seals on a Weldotron 1400 at 80 packages per minute. Five seal strength tests at each wire amperage were conducted and the averages are tablulated below.

| AMPERAGE | 1.3 | 1.4 | 1.5 | 1.6 | AVG. |
|---|---|---|---|---|---|
| Average seal strength lbs./in. (kg/m.) without siloxane interfaced | 4.3 (76.8) | 4.1 (73.2) | 3.7 (66) | 4.4 (78.6) | 4.1 (73.2) |
| Average seal strength with siloxane interfaced | 6.3 (112.5) | 5.7 (101.8) | 6.3 (112.5) | 6.7 (119.6) | 6.3 (112.5) |

The seal strength was measured on one (1) inch (2.54 cm) wide seals with a manual Scott tester model X5—D9280.

Example II

The procedures of Example I were repeated except that the thickness of the melt 23 as extruded was 8 mils (0.2 mm) rather than 16 mils (0.4 mm). Utilization of this decreased extrudate 23 thickness resulted in an oriented film having a thickness of 0.30 mils (0.008 mm). This result could not be arrived at without utilization of the internal liquid polyorganosiloxane 7 spray. Without the liquid polyorganosiloxane 7 the heated material 32 exiting the oven 41 internally welded so extensively that it could not be reopened or inflated.

Example III

The procedures of Example I were repeated except that a 70/30 percent, by weight, blend of conventional low density polyethylene (Rexene PE 109) and high density polyethylene (ARCO FB66),

respectively, was substituted for the Dow Linear Intermediate Density Polyethylene X061500.37. An irradiation dosage of 5 MR plus or minus 1 MR was required. As in Example I, 16 mil (0.4 mm) extrudate produced 0.6 mil (0.015 mm) finished film.

It is anticipated that the minimal obtainable thickness utilizing the liquid polyorganosiloxane 7 spray will be 0.5 mil (0.013 mm) finished product. Without the liquid polyorganosiloxane spray the present minimal obtainable finished product is 0.66 mil (0.017 mm).

Hot wire heat seal strength data for this material is tabulated below. These seals were made statically on a Weldotron 6402 L Bar Sealer set at 5 amps, wire expansion gap ¼ inch (6.35 mm) and a 1.5 second dwell time.

Five samples of the seal strength without the siloxane interfaced and with the siloxane interfaced were measured. Additionally, the seal strength of material upon which an excessive amount of siloxane (24 mg. per sq. foot or 258 mg/m$^2$) was applied and then interfaced are tabulated.

The averages are:

| | |
|---|---|
| Average seal strength without siloxane interface | 4.7 lbs/in. (84 kg/m) |
| Average seal strength with siloxane interface (0.148 mg. per sq. foot or 1.59 mg/m$^2$) | 6.9 lbs/in. (123 kg/m) |
| Average seal strength with excess applied siloxane (0.889 mg. per sq. foot or 9.57 mg/m$^2$) | 2.4 lbs/in. (43 kg/m) |

The seal strength was measured on a Scott tester CRE 500.

Clearly the seal strength was enhanced when an amount of polyorganosiloxane within the disclosed range was applied. However, when excess polyorganosiloxane was applied the hot wire trim seal strength deteriorated greatly.

Example IV

The procedure of Example I were repeated except linear low density Dowlex 2032 polyethylene resin of density 0.926 g/cm$^3$ and melt index of 2.0 was substituted for the Dow X061500.37. Extruded 16 mil (0.4 mm) melt resulted in a finished film thickness of 0.6 mil (0.015 mm).

The following Table shows various physical characteristics of bubble oriented films produced from Dowlex polyethylene X061500.37 resin with an air mandrel and with and without internal application of liquid silicone.

| Test | ASTM Test No. | With Air Shoe W/O Silicone | | With Air Shoe with Silicone | | | | |
|---|---|---|---|---|---|---|---|---|
| Nominal Film Thickness, mols (mm.) | — | 0.75 (0.019) | 0.60 (0.015) | 0.75 (0.019) | 0.60 (0.015) | 0.50 (0.013) | 0.40 (0.01) | 0.30 (0.008) |
| Tensile, PSI — MD (KPa) | D 882 | 17,400 (120000) | 17,400 (120000) | 18,600 (128000) | 20,000 (138000) | 19,100 (132000) | 20,800 (143000) | 22,000 (152000) |
| Tensile, PSI — TD (KPa) | D 882 | 17,300 (119000) | 15,000 (103000) | 18,400 (127000) | 16,000 (110000) | 23,900 (165000) | 22,100 (152000) | 20,100 (139000) |
| Elongation, % MD | D 882 | 114 | 115 | 117 | 123 | 110 | 112 | 97 |
| Elongation, % TD | D 882 | 106 | 95 | 125 | 139 | 104 | 86 | 81 |
| Tear Propagation, gms — MD | D 1938 | 8.5 | 6.5 | 8.3 | 7.6 | 5.4 | 3.6 | 2.7 |
| Tear Propagation, gms — TD | D 1938 | 8.1 | 6.2 | 10.1 | 9.4 | 5.8 | 3.0 | 2.6 |
| Ball Burst, (cm-kg) | D 3420 | 14.9 | 11.4 | 16.4 | 16.9 | 12.6 | 9.4 | 8.8 |
| Haze, % | D 1003 | 1.0 | 1.2 | 1.5 | 1.1 | 0.7 | 0.8 | 0.9 |
| Gloss, % — 45° Angle | D 2457 | 97 | 95 | 91 | 94 | 95 | 97 | 97 |
| Total Transmission, % | D 1003 | 91.9 | 91.8 | 91.4 | 92.1 | 92.1 | 92.1 | 92.2 |
| Clarity, % | D 1746 | 73.8 | 83.3 | 74.2 | 76.7 | 84.2 | 86.9 | 86.7 |

The present invention may be applied to all of the numerous other resins which weld during processing. The invention is also applicable to coextruded materials wherein the inner coextruded layer welds during processing.

The liquid polyorganosiloxane 7 need not be GE SF 18 polydimethylsiloxane to be effective. However, since this material has received United States FDA food usage approval, it is preferred in food applications at this time. Other comparable grădes of liquid polyorganosiloxanes 7 from G.E., Dow-Corning or the Union Carbide Corporation are available and may be utilized. The general formula of these materials is $(R_1R_2SiO)_n$ and their structure is believed to be:

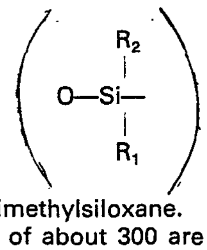

$R_1$ and $R_2$ may be the same, as in polydimethylsiloxane.

In food applications, vicosity levels of about 300 are necessary to meet the FDA requirements. Of course, in non-food applications grades of lower viscosity may be appropriate.

As a result of the increased structural strength of linear low and intermediate density resins, a final product thickness of less than 0.5 mil (0.01 mm) is consistently obtainable with the blown bubble process when linear polyethylene precursor resins having a density range of from 0.915 to 0.940 are utilized in conjunction with the internal application of a polyorganosiloxane. A final product thickness of less than 0.5 mil (0.01 mm) is probably not consistently obtainable when standard, non-linear, resins are employed in the above disclosed improved process. However, the smallest obtainable final product thickness for such non-linear resins is reduced by utilization of the new process.

It should be noted that the amount of polyorganosiloxane per unit area of final product will vary with the expansion ratios utilized (i.e. the size of the bubble). Taking the expansion ratios in Example I of 5 to 1 in the transverse direction coupled with 5.4 to 1 in the longitudinal direction, it is easily calculated that the one square foot or square metre of extruded material will be expanded into 27 square feet ȯr 27 square metres of final product. Coupling this exemplary expansion ratio with an application range of from 1—20 milligrams of polyorganosiloxane per square foot (10 to 215 mg/$m^2$) of extruded polyethylene material the range of polyorganosiloxane per square foot of final polyethylene film product is calculated to be from 0.036 to 0.741 milligrams of polyorganosiloxane per square foot (0.38 to 8 mg/$m^2$) of finished polyethylene film material. The preferred range of 2—16 milligrams per square foot (21 to 172 mg/$m^2$) of extruded material may be calculated to be from 0.074 to 0.593 milligrams of polyorganosiloxane per square foot (0.8 to 6.4 mg/$m^2$) of finished polyethylene material. And, as stated above, when 4 milligrams per square foot (43 mg/$m^2$) of polyorganosiloxane are applied to the extruded polyethylene the coating will be 0.148 milligrams per square foot (1.6 mg/$m^2$) of final product. The amount of polyorganosiloxane per unit area of final product can be calculated for any known expansion ratio. Expansion ratios generally vary, depending on the materials characteristics, from 3 to 1 in the transverse direction coupled with 3 to 1 in the longitudinal direction to 7 to 1 in the transverse direction coupled with 7 to 1 in the longitudinal direction.

**Claims**

1. Process for producing a tubular polyolefin material having a heat-sealable interior surface by extruding the said material over an air mandrel in the form of a tube, coating the interior surface of the tube with 1 to 20 milligrams per square foot (10 to 215 mg/$m^2$) of a polyorganosiloxane, collapsing the tube, stretching the tube by maintaining a blown bubble therein, and finally collapsing the stretched tube into a lay-flat arrangement.

2. A process according to claim 1, in which the said extruded tubular material is a blend of polyolefins.

3. A process according to claim 1 or 2, in which the said extruded tubular material is a multi-layer extruded material.

4. A process according to claim 2 or 3, in which the said polyolefin or an innermost layer of the said multi-layer co-extruded material is polyethylene.

5. A process according to any of claims 1 to 4, in which the said polyorganosiloxane is polydimethylsiloxane.

6. A process according to any of claims 1 to 5, in which from 2—16 milligrams of polydimethylsiloxane are applied per square foot (21 to 172 mg/$m^2$) of said interior surface.

7. A process according to claim 6 in which about 4 milligrams per square foot (42 mg/$m^2$) of the polydimethylsiloxane are applied to the said interior surface.

8. A process according to any of claims 1 to 7 in which the stretched and collapsed tube is slit to form a sheet film.

9. A tubular polyolefin material produced by the blown bubble technique and subsequently laid flat having a thickness less than 0.5 mils (0.013 mm), and a heat-sealable interior surface provided with a coating of 0.036 to 0.741 milligrams of polyorganosiloxane per square foot (0.36 to 8 mg/$m^2$).

10. A material according to claim 9 made of a blend of polyolefins.

11. A material according to claim 9 or 10 which is a multi-layer extruded material.

12. A material according to any of claims 9 to 11 wherein the said polyolefin or an innermost layer of said multi-layer coextruded material is polyethylene.

13. A material according to claim 12 wherein the said polyethylene is linear low density polyethylene.

14. A material according to claim 12 wherein the said polyethylene is linear intermediate density polyethylene.

15. A material according to any of claims 9 to 14, wherein said polyorganosiloxane is polydimethylsiloxane.

16. A material according to any of claims 9 to 15, wherein the said coating comprises from 0.074 mg to 0.593 mg of polyorganosiloxane per square foot (0.8 to 6.4 mg/$m^2$).

17. A material according to claim 16 wherein the said coating comprises about 0.148 milligrams of polyorganosiloxane per square foot (1.6 mg/$m^2$).

18. A sheet film formed by slitting a tubular polyolefin material as claimed in any of claims 9 to 17.

**Patentansprüche**

1. Verfahren zur Herstellung eines schlauchförmigen Polyolefinmaterials mit einer inneren heißsiegelbaren Oberfläche, bei dem das Material über einen Luftdorn in Form eines Schlauchs extrudiert wird, die innere Oberfläche des Schlauchs mit 10 bis 215 mg/$m^2$ eines Polyorganosiloxans beschichtet wird, der Schlauch zusammenfallengelassen wird, der Schlauch gestreckt wird, indem in ihm eine aufgeblasene Blase aufrechterhalten wird, und schließlich der gestreckte Schlauch zu einer flachgelegten Anordnung zusammenfallengelassen wird.

2. Verfahren nach Anspruch 1, dadurch gekennzeichnet, daß das extrudierte schlauchförmige Material eine Mischung von Polyolefinen ist.

3. Verfahren nach Anspruch 1 oder 2, dadurch gekennzeichnet, daß das extrudierte schlauchförmige Material ein mehrschichtiges extrudiertes Material ist.

4. Verfahren nach Anspruch 2 oder 3, dadurch gekennzeichnet, daß die Polyolefin- oder eine innerste Schicht des mehrschichtigen koextrudierten Materials Polyethylen ist.

5. Verfahren nach einem der Ansprüche 1 bis 4, dadurch gekennzeichnet, daß das Polyorganosiloxan Polydimethylsiloxan ist.

6. Verfahren nach einem der Ansprüche 1 bis 5, dadurch gekennzeichnet, daß 21 bis 172 mg Polydimethylsiloxan je $m^2$ der inneren Oberfläche aufgebracht werden.

7. Verfahren nach Anspruch 6, dadurch gekennzeichnet, daß etwa 42 mg Polydimethylsiloxan je $m^2$ der inneren Oberfläche aufgebracht werden.

8. Verfahren nach einem der Ansprüche 1 bis 7, dadurch gekennzeichnet, daß der gestreckte und zusammengefallene Schlauch unter Bildung einer blattförmigen Folie aufgeschlitzt wird.

9. Nach der Blasentechnik hergestelltes, anschließend flachgelegtes, schlauchförmiges Polyolefinmaterial mit einer Dicke von 0,013 mm und einer heißsiegelbaren inneren Oberfläche ausgestattet mit einer Beschichtung von 0,36 bis 8 mg Polyorganosiloxan je $m^2$.

10. Material nach Anspruch 9 hergestellt aus einer Mischung von Polyolefinen.

11. Material nach Anspruch 9 oder 10, dadurch gekennzeichnet, daß es eine mehrschichtiges extrudiertes Material ist.

12. Material nach einem der Ansprüche 9 bis 11, dadurch gekennzeichnet, daß die Polyolefin- oder eine innerste Schicht des mehrschichtigen koextrudierten Materials Polyethylen ist.

13. Material nach Anspruch 12, dadurch gekennzeichnet, daß das Polyethylen lineares Polyethylen niederer Dichte ist.

14. Material nach Anspruch 2, dadurch gekennzeichnet, daß das Polyethylen lineares Polyethylen mittlerer Dichte ist.

15. Material nach einem der Ansprüche 9 bis 14, dadurch gekennzeichnet, daß das Polyorganosiloxan Polydimethylsiloxan ist.

16. Material nach einem der Ansprüche 9 bis 15, dadurch gekennzeichnet, daß die Beschichtung 0,8 bis 6,4 mg Polyorganosiloxan je $m^2$ umfaßt.

17. Material nach Anspruch 16, dadurch gekennzeichnet, daß die Beschichtung etwa 1,6 mg Polyorganosiloxan je $m^2$ umfaßt.

18. Blattförmige Folie hergestellt durch Aufschlitzen eines schlauchförmigen Polyolefinmaterials gemäß einem der Ansprüche 9 bis 17.

**Revendications**

1. Procédé de fabrication d'un matériau tubulaire de polyoléfine ayant une surface intérieure thermoscellable, par extrusion dudit matériau sur un mandrin à air sous la forme d'un tube, revêtement de la surface intérieure du tube par 1 à 20 milligrammes par pied au carré (10 à 215 mg/$m^2$) d'un polyorganosiloxane, affaissement du tube, étirage du tube en y maintenant une bulle soufflée et enfin affaissement du tube étiré en un agencement à plat.

2. Procédé selon la revendication 1, où ledit matériau tubulaire extrudé est un mélange de polyoléfines.

3. Procédé selon la revendication 1 ou 2, où ledit matériau tubulaire extrudé est un matériau extrudé multicouche.

4. Procédé selon la revendication 2 ou 3, où ladite polyoléfine ou une couche très interne dudit matériau coextrudé multicouche est du polyéthylène.

5. Procédé selon l'une quelconque des revendications 1 à 4, où ledit polyorganosiloxane est du polydiméthylsiloxane.

6. Procédé selon l'une quelconque des revendications 1 à 5, où l'on applique de 2 à 16 milligrammes du polydiméthylsiloxane par pied au carré (21 à 172 mg/$m^2$) de ladite surface intérieure.

7. Procédé selon la revendication 6, où l'on applique environ 4 milligrammes par pied au carré (42 mg/$m^2$) du polydimèthylsiloxane à ladite surface intérieure.

8. Procédé selon l'une quelconque des revendications 1 à 7, où le tube étiré et affaissé est fendu pour former un film en feuille.

9. Matériau de polyoléfine tubulaire produit par la technique de la bulle soufflé et subséquemment mis à plat, ayant une épaisseur inférieure à 0,5 millième de pouce (0,013 mm) et une surface intérieure thermoscellable pourvue d'un revêtement de 0,036 à 0,741 milligramme de polyorganosiloxane par pied au carré (0,36 à 8 mg/$m^2$).

10. Matériau selon la revendication 9 fait d'un mélange de polyoléfines.

11. Matériau selon la revendication 9 ou 10 qui est un matériau extrudé multicouche.

12. Matériau selon l'une quelconque des revendications 9 à 11, où ladite polyoléfine ou une couche interne dudit matériau coextrudé multicouche est du polyéthylène.

13. Matériau selon la revendication 12, où ledit polyéthylène est du polyéthylène linéaire de faible densité.

14. Matériau selon la revendication 12, où ledit polyéthylène est un polyéthylène linéaire de densité intermédiaire.

15. Matériau selon l'une quelconque des revendications 9 à 14 où ledit polyorganosiloxane est du polydiméthylsiloxane,

16. Matériau selon l'une quelconque des revendications 9 à 15, où ledit revêtement comprend de 0,074 mg à 0,593 mg de polyorganosiloxane par pied au carré (0,8 à 6,4 mg/$m^2$).

17. Matériau selon la revendication 16, où ledit revêtement comprend environ 0,140 milligrammes de polyorganosiloxane par pied au carré (1,6 mg/$m^2$).

18. Film en feuille formé en fendant un matériau de polyoléfine tubulaire selon l'une quelconque des revendications 9 à 17.

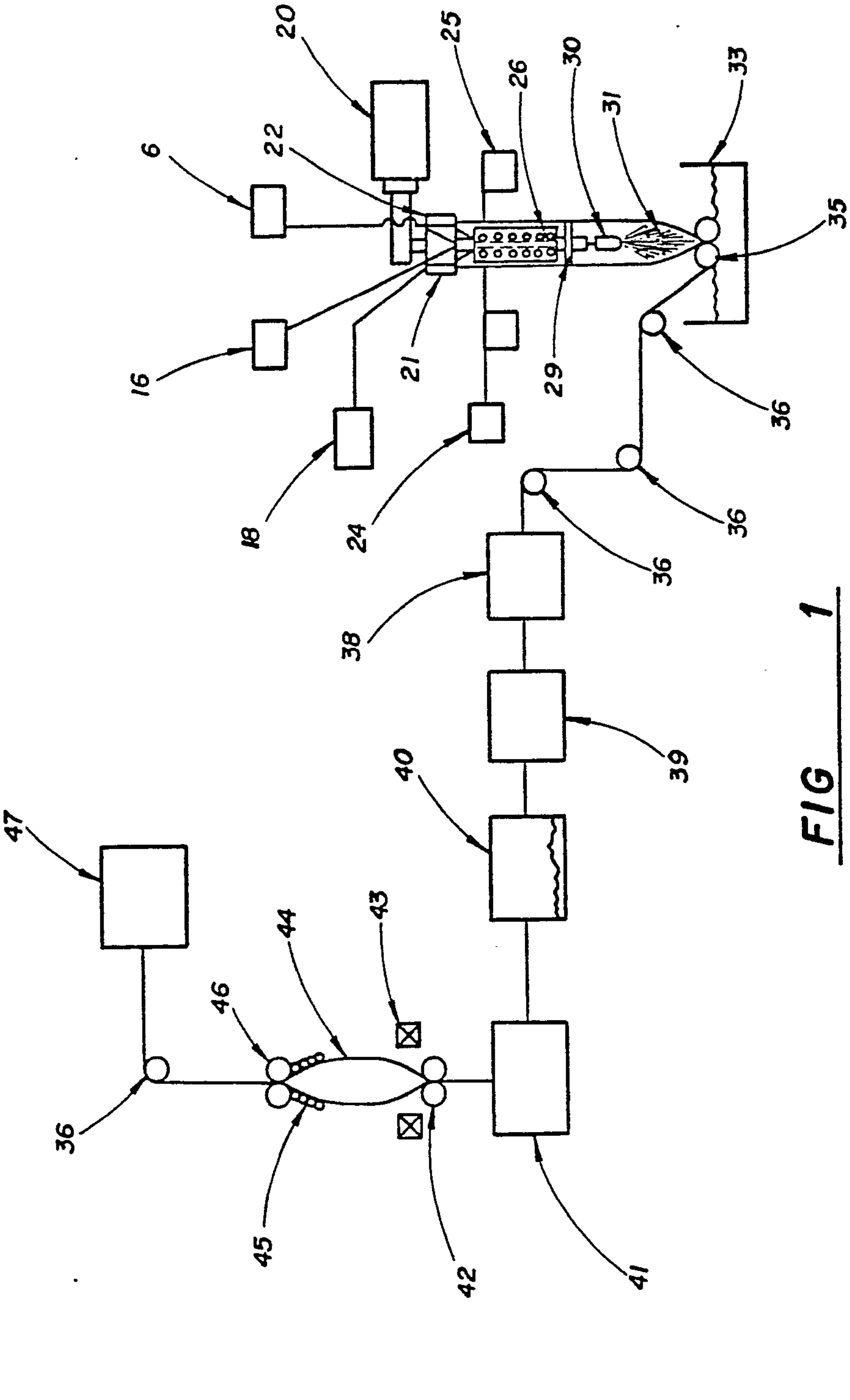


FIG 1

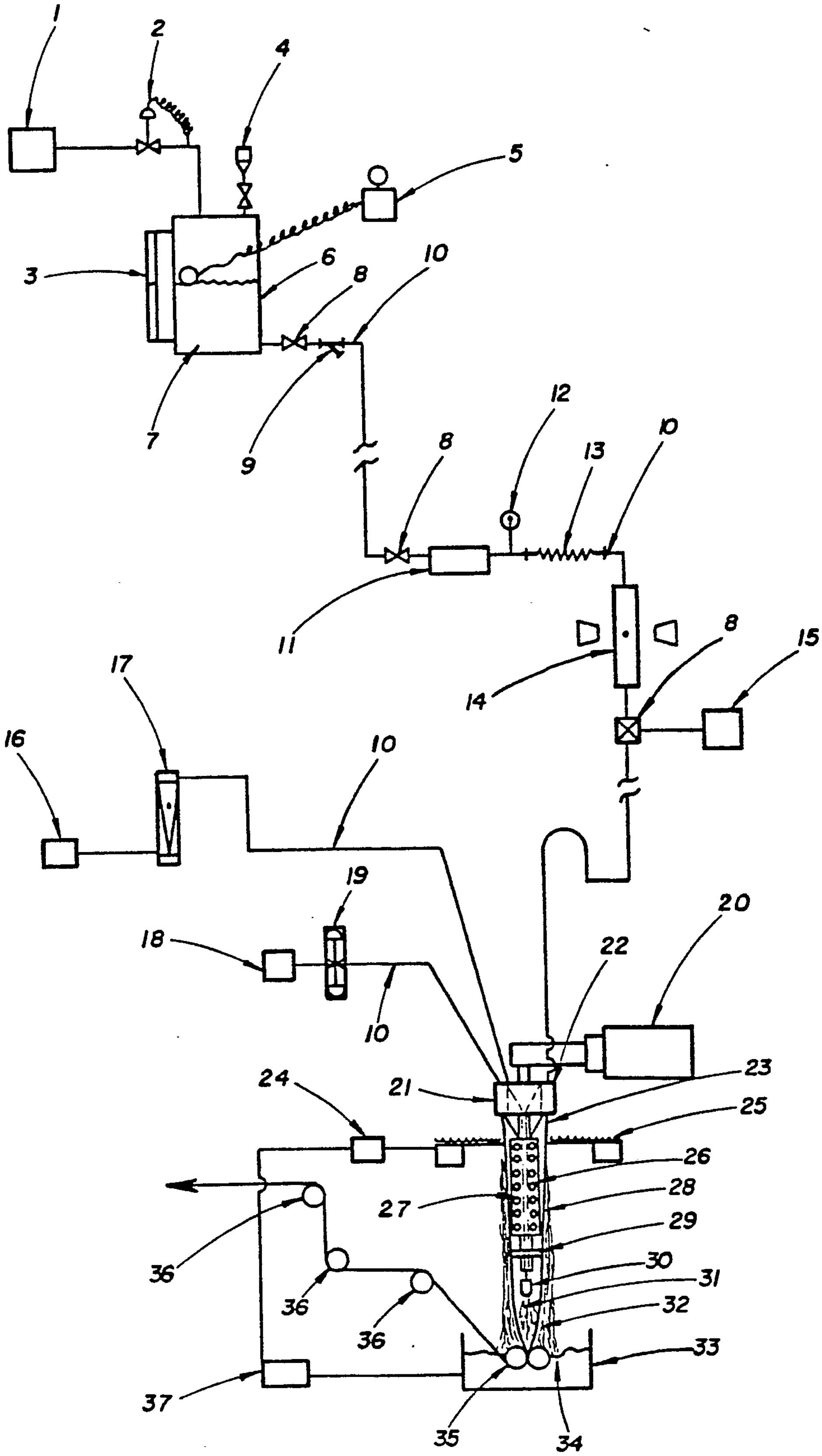
1
2
4
5
3
6
8
10
7
9
12
13
10
8
11
14
8
15
17
16
10
19
20
18
10
22
21
23
24
25
26
27
28
29
30
31
32
36
36
36
33
37
35
34

FIG 2

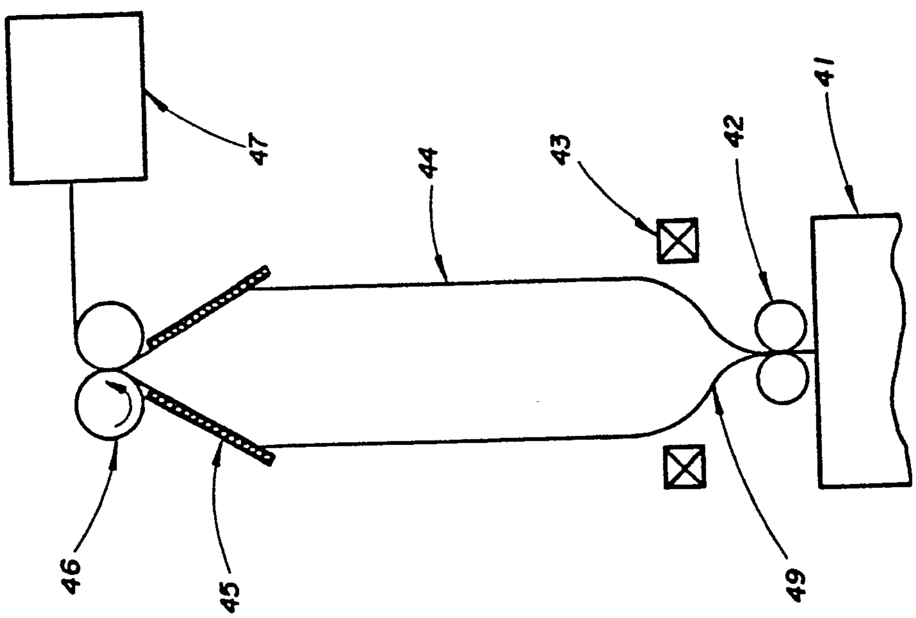


FIG 4

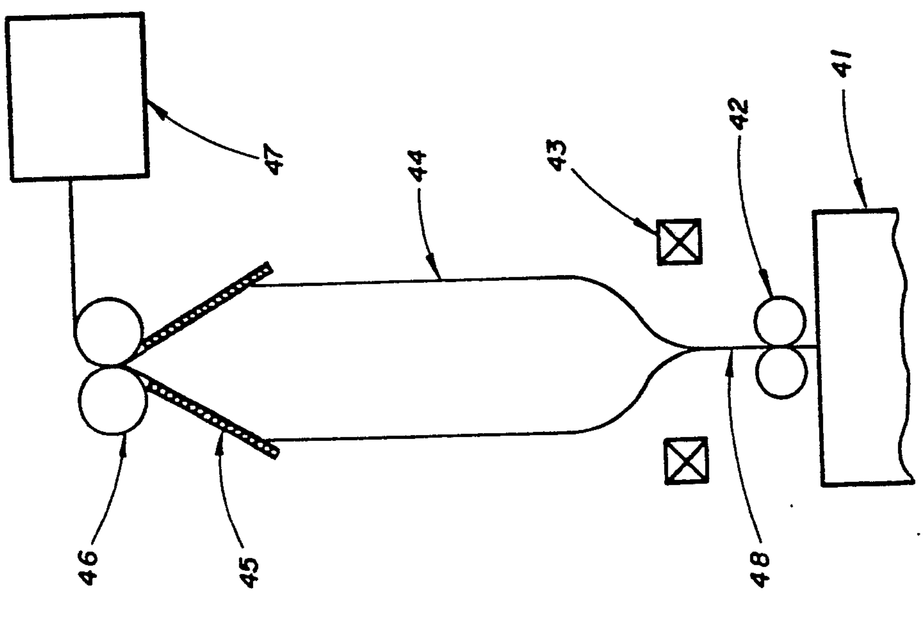


FIG 3